# EUROPEAN PATENT APPLICATION

(11) **EP 1 032 008 A2**
(43) Date of publication of application: **30.08.2000**
(21) Application number: 00101511.4
(22) Date of filing: 26.01.2000
(51) Int. Cl.: H01H 25/00, H01H 9/02, H01H 13/70

(54) **Portable terminal**

(30) Priority: 26.02.1999 JP 5080199
(71) Applicant: MATSUSHITA ELECTRIC INDUSTRIAL CO., LTD., Kadoma-shi, Osaka (JP)
(72) Inventor: Hayashi, Takahiro, Yokohama-shi, Kanagawa 227-0045 (JP); Hasegawa, Akira, Tokyo 171-0014 (JP); Sato, Hiroyuki, Tokyo (JP); Tomobe, Shinji, Yokohama-shi, Kanagawa 223-0053 (JP); Ohmura, Hiroshi, Kanazawa-shi, Ishikawa 921-8044 (JP)
(74) Representative: Grünecker, Kinkeldey, Stockmair & Schwanhäusser Anwaltssozietät

(57) **Abstract**

A portable terminal is in that a concave curved portion (10) is formed on the surface of a cover of a portable phone (1) from the lower end portion of a display portion (6) to a transmitter portion (7). A cross direction input operation switch knob (4) is provided projecting from the bottom of the concave curved portion (10). The cross direction input operation switch knob (4) is formed shorter than a depth of the concave curved portion (10) so as not to come in contact with a flat surface of a desk even when the portable phone (1) is downwardly placed on the desk.

## Description

### BACKGROUND OF THE INVENTION

The present invention relates to a portable terminal, such as a portable phone, in particular, it relates to a portable terminal characterized in a multi-direction switch knob structure.

Portable terminals, in particular, portable phones have been made smaller, lighter and thinner in response to demand from the users. As to the operation switch, multi-functions and a smaller size have been provided in accordance with the smaller size, lighter weight and thinner shape.

As a means for realizing multi-functions of an operation switch, a so-called joy stick switch, which operates a plurality of switches with one input operation member, has been provided. As to the shape of the input operation member of a joy stick switch, for example, a control stick-like shape is adopted in an in stalled appliance, but in general, a sphere-like shape is adopted in a portable appliance for realizing a smaller size.

For example, a remote controller to be used as an image switching operation switch of a television set (JP-A-6-251663) has been proposed. As shown in FIG. 7, the remote controller comprises a joy stick knob 30 as the input operation member of the joy stick switch with a spherical or conical shape so as to be used as a multi-direction input operation switch knob. Moreover, similar to the case of the multi-direction input operation switch knob, in general, a cross direction input operation switch knob has a spherical or conical knob tip shape for facilitating operation in the cross directions.

However, as mentioned above, according to the trend toward a smaller size, the multi-direction input operation switch knob projects drastically from the front surface of a portable terminal housing, occupying a large area. Besides, the projection may result in wrong operation during carriage.

On the other hand, according to the trend toward a smaller size of the spherical or conical cross direction input operation switch knob, since the portion to be caught by a finger is small, it is conceivable that the operativity is deteriorated or change of wrong operation is larger at the time of the key input operation by a user.

### SUMMARY OF THE INVENTION

In light of the circumstances, an object of the invention is to provide a portable terminal comprising a multi-direction input operation switch knob capable of operation easily and certainly without the need of enlarging the space of the key input operation portion even though the portable terminal is made smaller, and furthermore, capable of preventing wrong operation.

In order to achieve the object, the present invention is a portable terminal comprising a housing having a concave curved portion on a front surface thereof, and a multi-direction input operation member projecting from the bottom of the concave curved portion. A height of multi-direction input operation is less than a depth of concave curved portion, so a top of the multi-direction input operation member is provided without contacting with a flat surface of a rigid body when the housing is downwardly placed on the flat surface. According to the configuration, easy and certain operation can be achieved without the need of enlarging the space for the operation member even though the portable terminal is made smaller, and furthermore, wrong operation can be prevented even when the portable terminal is placed downward on, for example, a desk.

Since a first aspect of the invention is a portable terminal comprising a housing having a concave curved portion on a front surface thereof, and a multi-direction input operation member projecting from the bottom of the concave curved portion, wherein a height of multi-direction input operation is less than a depth of concave curved portion, that is, a top of the multi-direction input operation member is placed under a plane including ends of concave curved portion, so a top of the multi-direction input operation member is provided without contacting with a flat surface of rigid body when the housing is downwardly placed on the flat surface, the effect of preventing wrong operation by providing the multi-direction input operation member without contacting with the flat surface of a rigid body even if the housing is placed on the flat surface with the concave curved portion downward can be achieved.

Since a second aspect of the invention comprises the first aspect, wherein one of a concave portion and a convex portion is provided at an upper end of a pulling surface of the multi-direction input operation member, the effect of preventing wrong operation by providing the multi-direction input operation member without contacting with a flat surface of a rigid body even if the housing is downwardly placed on the flat surface as well as the effect of facilitating the operation of the multi-direction input operation member to the pulling side can be achieved.

Since a third aspect of the invention comprises the first or second aspect, wherein a curved surface is formed on both side rims of the upper surface of the multi-direction input operation member, with the width of the upper surface set at a predetermined value, the effect of preventing wrong operation by providing the multi-direction input operation member without contacting with a flat surface of a rigid body even if the housing is placed the a flat surface with the concave curved portion downward as well as the effect of facilitating the operation of the multi-direction input operation member to the sliding direction can be achieved.

Since a fourth aspect of the invention is any one of the first to third aspects, wherein the multi-direction input operation member is formed like a pyramid having a polygon with n vertices as its base so as to provide a multi-direction input operation switch having n contacts, the effect of preventing wrong operation by providing the multi-direction input operation member without contacting with a flat surface of a rigid body even if the housing is placed on the flat surface with the concave curved portion downward as well as the effect of realizing a multi-direction input operation switch having n contacts can be achieved.

### BRIEF DESCRIPTION OF THE DRAWINGS

FIG. 1 is an external appearance view of a portable phone according to a first embodiment of the invention.
FIG. 2 is a diagram describing the state of the portable phone according to the first embodiment of the invention placed on a desk downward.
FIG. 3 is a cross-sectional view showing the structure of a cross direction input operation switch knob according to a second embodiment of the invention.
FIG. 4 is a diagram for explaining the sliding operation of the cross direction input operation switch knob according to the second embodiment of the invention.
FIG. 5 is a cross-sectional view showing the structure of a cross direction input operation switch knob according to a third embodiment of the invention.
FIG. 6 is a cross-sectional view showing the structure of a cross direction input operation switch knob according to a fourth embodiment of the invention.

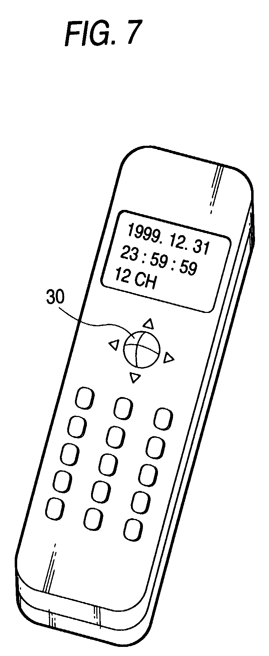

FIG. 7 is an external appearance view of a remote controller of a television set.

### DESCRIPTION OF THE PREFERRED EMBODIMENTS

Hereinafter embodiments of the invention will be explained in detail with reference to accompanied drawings.

### (First Embodiment)

In a first embodiment of the invention, a concave curved portion is provided in a housing of a portable phone as well as a substantially quadrangular pyramid cross direction input operation switch knob is provided projecting from the concave curved portion so as to avoid contact of the cross direction input switch knob with the flat surface of the desk when the portable phone is placed on a desk with the concave curved portion downward.

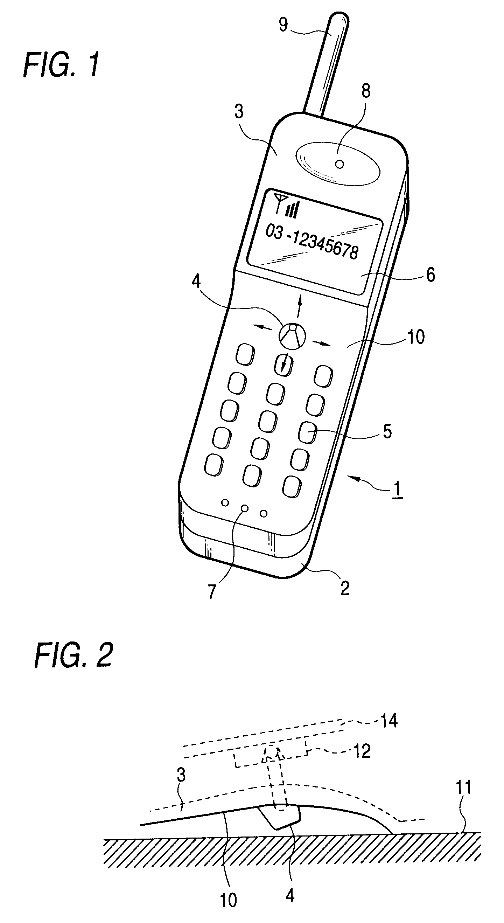

FIG. 1 is an external appearance view of a portable phone according to the first embodiment of the invention. The portable phone 1 has a case 2 and a cover 3, which comprise a housing, with an external antenna 9 mounted on the left upper end of the housing. On the surface of the cover 3 are provided a receiver portion 8, a display portion 6, a cross direction input operation switch knob 4, a ten key pad 5, and a transmitter portion 7 from above. Moreover, as described as a concave curved portion (hereinafter referred to simply a curved portion) 10, the surface of the cover 3 is formed in a bow-like shape from the lower end portion of the display portion 6 to the receiver portion 7.

Moreover, the housing of the portable phone 1 has a narrow entire shape in consideration of convenience, with the cross direction input operation switch knob 4 mounted projecting on the bottom of the curved portion 10 formed on the surface of the cover 3. According to the projecting, the portable phone 1 can be grasped with one hand so as to facilitate operation. Moreover, the cross direction input operation switch knob 4 is formed in a shape with an upper end portion of a quadrangular pyramid cut horizontally so as to have a small flat surface thereat. In this figure, the arrows described in the upper and lower, and the right and left directions of the cross direction input operation switch knob 4 show the operation directions of the knob 4. That is, the arrows in the right and left directions show the sliding directions, the arrow in the upward direction shows the pushing direction, and the arrow in the downward direction shows the pulling direction.

As shown in FIG. 2, the degree of curvature of the curved portion 10 and the position and the degree of projection of the cross direction input operation switch knob 4 are set such that the cross direction input operation switch knob 4 does not come in contact with the flat surface of the desk 11 when it is placed on a desk 11 with the surface of the cover 3 downward. Therefore, according to the portable phone 1, even if the user places it on the desk 11 inadvertently with the surface of the cover 3 downward, the risk of wrong operation of a cross direction input operation switch 12 mounted on a printed board 14 in the housing can be avoided.

As mentioned above, according to the first embodiment of the invention, since the cross direction input operation switch knob 4 is mounted projecting from the bottom of the curved portion 10 on the surface of the cover 3, the portable phone 1 can be grasped with one hand so as to be operated easily. Moreover, even if it is placed on a desk inadvertently with the surface of the cover 3 downward, there is no risk of wrong operation of the cross direction input operation switch 12.

### (Second Embodiment)

In a second embodiment of the invention, the operation is further facilitated by skillfully providing the shape and the width of the cross direction input operation switch knob.

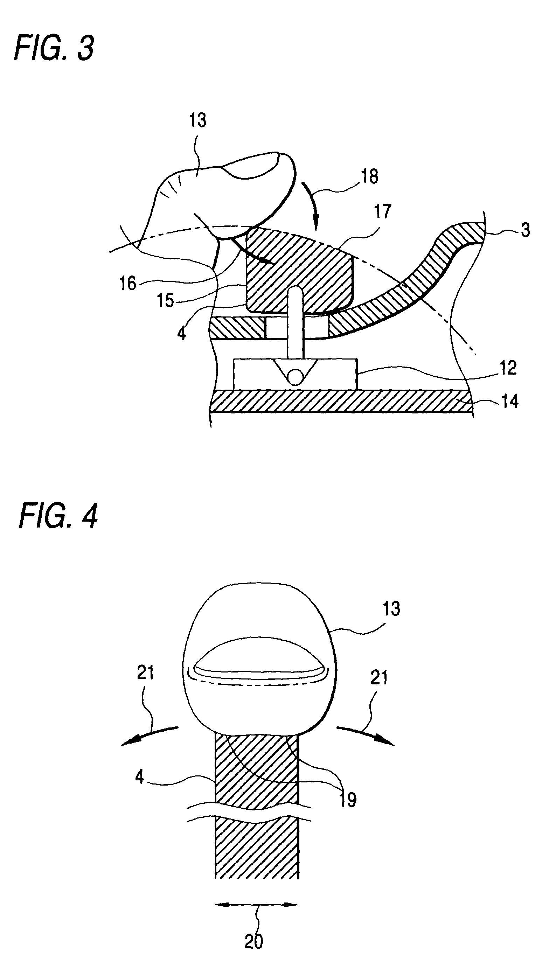

FIGS. 3 and 4 are cross-sectional views showing the structure of a cross direction input operation switch knob 4 according to the second embodiment of the invention. In FIGS. 3 and 4, portions corresponding to those of FIGS. 1 and 2 are applied with the same numerals used in the figures (the same is applied to the following embodiments). The entire structure of a portable phone provided with the cross direction input operation switch knob 4 is the same as that of FIG. 1 (the same is applied to the following embodiments).

As shown in FIG. 1, since the cross direction input operation switch knob 4 projects from the bottom of the curved portion on the surface of the cover 3, the portable phone 1 can be grasped with one hand so as to be operated easily. Therefore, the user operates the cross direction input operation switch knob 4 with a finger 13 placed on the cross direction input operation switch knob 4.

In the second embodiment of the invention, as shown in FIG. 3, a pushing surface 15 substantially perpendicular to the surface of the cover 3 is provided so as to facilitate tilt of the cross direction input operation switch knob 4 to the pushing side in conducting the pushing operation 16 with the substantially lower half of the bulb of a finger 13. Moreover, a pulling surface 17 is formed by providing a inclined surface with the front side of the cross direction input operation switch knob 4 (left side in FIG. 3) made higher so as to facilitate tilt of the cross direction input operation switch knob 4 to the pulling side in the downward action of the finger 13, that is, in conducting the pulling operation 18 with the substantially upper half of the bulb of a finger 13. Furthermore, as shown in FIG. 4, a pair of sliding surfaces 19 with a small angle or a small curvature of the corner are provided on both side rims of the surface of the cross direction input operation switch knob 4 as well as the knob width 20 is set in the degree within the width of the finger 13 and the fresh of the bulb of the finger 13 is sufficient so that the cross direction input operation switch knob 4 can be caught by the bulb of the finger 13 easily in the action of moving the finger 13 in the right and left directions, that is, in conducting the sliding operation 21.

As mentioned above, according to the second embodiment of the invention, by skillfully providing the shape and the width of the cross direction input operation switch knob 4, the cross direction input operation switch knob 4 can be caught by the finger 13 easily with respect to the operation with movement in the sliding directions and the pulling direction so that the cross direction input operation switch knob 4 can be tilted easily for facilitating the input operation.

### (Third Embodiment)

In a third embodiment of the invention, the operation in the pulling direction is facilitated by providing a convex portion in the pulling surface so as to be caught easily by a finger.

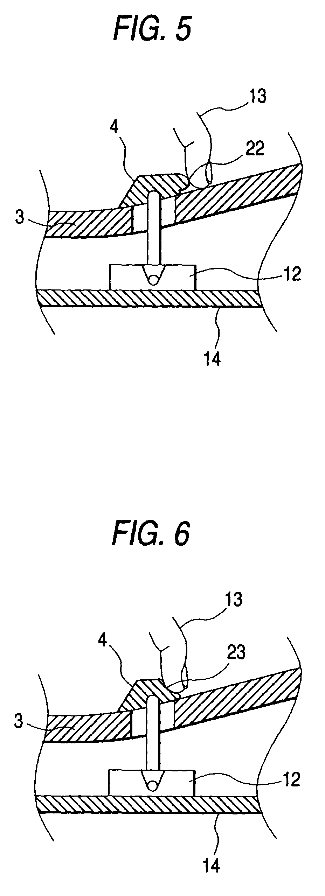

FIG. 5 is a cross-sectional view of a cross direction input operation switch knob 4 according to the third embodiment of the invention. As shown in the figure, a convex portion 22 is provided at the upper end of the pulling surface 17 of the cross direction input operation switch knob 4 (the upper end herein denotes the external antenna side of the housing of the portable phone 1, which is the right end side in FIG. 5). Since the convex portion 22 is provided at the upper end of the pulling surface 17, the cross direction input operation switch knob 4 can easily be caught by the finger 13 with respect to the operation with movement in the pulling direction so that the pulling surface 17 can be pulled easily by the finger 13.

### (Fourth Embodiment)

In a fourth embodiment of the invention, the operation in the pulling direction is facilitated by providing a concave portion in the pulling surface so as to be caught easily by a finger.

FIG. 6 is a cross-sectional view showing the structure of a cross direction input operation switch knob 4 according to the fourth embodiment of the invention. As shown in the figure, a concave portion 23 is provided at the upper end of the pulling surface 17 of the cross direction input operation switch knob 4 (the right end side in FIG. 6). Since the concave portion 23 is provided at the upper end of the pulling surface 17, the cross direction input operation switch knob 4 can easily be caught by the finger 13 with respect to the operation with movement in the pulling direction so that the pulling surface 17 can be pulled easily by the finger 13.

Although the cases with the cross direction input operation switch knob 4 provided as the multi-direction input operation switch have been explained in the above-mentioned embodiments, a multi-direction input operation switch having n contacts (n is an integer of 5 or more) can be used in the invention. In this case, the shape of the multi-direction input operation switch knob can be formed like a pyramid having a polygon with n vertices as its base.

As heretofore described, according to the invention, since a concave curved portion is formed on the front surface of a portable terminal as well as a multi-direction input operation member provided projecting from the bottom surface of the curved portion is formed without contacting with the rigid body flat surface when the housing is downwardly placed on the flat surface, the effect of realizing an operation member ensuring certain switching operation without the risk of wrong operation in a small space can be achieved.

## Claims

1. A portable terminal comprising:
a housing having a concave curved portion on a front surface thereof ; and
a multi-direction input operation member projecting from a bottom of the concave curved portion,
wherein a height of the multi-direction input operation member is less than a depth of the concave curved portion.

2. The portable terminal according to claim 1,
wherein a top of the multi-direction input operation member is placed under a plane including ends of concave curved portion.

3. The portable terminal according to claim 1, wherein one of a concave portion and a convex portion is provided at an upper end of a pulling surface of the multi-direction input operation member.

4. The portable terminal according to claim 1, wherein a curved surface is formed on both side rims of an upper surface of the multi-direction input operation member, with the width of the upper surface set at a predetermined value.

5. The portable terminal according to claim 1, wherein the multi-direction input operation member is formed like a pyramid having a polygon with n vertices as its base so as to provide a multi-direction input operation switch having n contacts.
